# EUROPEAN PATENT SPECIFICATION

(11) **EP 3 838 735 B1**
(45) Date of publication and mention of the grant of the patent: **09.04.2025**
(21) Application number: 20215839.0
(22) Date of filing: 18.12.2020
(51) Int. Cl.: B63B 43/18, G01S 7/521, G01S 15/93

(54) **WATERCRAFT FOR SURFACE NAVIGATION WITH DEVICE FOR DETECTING OBSTACLES AND DEVICE FOR DETECTING OBSTACLES FOR SUCH A WATERCRAFT**
ÜBERWASSERFAHRZEUG MIT VORRICHTUNG ZUR ERKENNUNG VON HINDERNISSEN UND VORRICHTUNG ZUR ERKENNUNG VON HINDERNISSEN FÜR EIN ÜBERWASSERFAHRZEUG
BATEAU POUR LA NAVIGATION DE SURFACE AVEC DISPOSITIF DE DETECTION D'OBSTACLES ET DISPOSITIF DE DETECTION D'OBSTACLES POUR UN TEL BATEAU

(30) Priority: 18.12.2019 IT 201900024397
(43) Date of publication of application: 23.06.2021
(73) Proprietor: Naeco S.r.l., 48014 Castel Bolognese (RA) (IT)
(72) Inventor: NERI, Tiziano, 41032 Cavezzo (MO) (IT); NISINI, Eugenio, 40134 Bologna (IT)
(74) Representative: Gallo, Luca

(56) References cited:
- DE-A1- 3 312 452
- GB-A- 2 011 076
- US-A- 3 886 487
- US-A1- 2018 043 978
- US-A1- 2018 279 596
- US-S- D 344 239

## Description

### Field of application

The present invention relates to a watercraft for surface navigation with device for detecting obstacles and to a device for detecting obstacles for a watercraft.

More in detail the invention is inserted in the nautical field in particular in the field of production of devices for aiding navigation, i.e. adapted to allow the safe advancement thereof by detecting floating or submerged obstacles so as to prevent damage to the hull, to the motors and to the hydrodynamic appendages which can negatively affect the integrity of the watercraft.

### State of the art

Presently, the detection of obstacles that would hinder the advancement of a boat is mainly entrusted to the pilot with direct observation of that present in front of the bow. The direct visual observation can however lead to evaluation errors, in particular for obstacles that are not clearly emerging, for example submerged below the water level or poorly visible in water, such as swimmers, divers far from the signaling buoy or semifloating objects.

The danger level and the frequency of possible impact increases as the advancing speed of the boat increases. On this matter, boats are known that are provided with hydrodynamic appendages capable of lifting the bottom of the boat in order to allow them to have less friction on the water and greater cruising speed. Known for example are boats provided with foils, with planing surfaces (e.g. of hydrofoils), i.e. boats are known whose hulls are provided with shaped forms adapted to lift the bottom.

For this type of boat, which generally is moved with greater speed on the water, it is more difficult to see the obstacles on the surface of the water or submerged below the surface at a depth of interference with the advancement of the boat, and the damage that can be created following impact against the obstacles can be quite significant.

The use of wing appendages involves further risks for the boat. Indeed, stability problems have been verified following impact with that which is present at sea, even only on one appendage outside the hull or on the rudder.

Known from document US2017/0365175 is an alert device for warning of objects at sea, which does not allow an optimal detection of the obstacles, i.e. in a manner such to prevent impact against the hull or against protruding parts.

Known from document US 2018279596 is a device for use at sea including an impermeable housing body configured for being at least partially submerged in the underwater environment, and means for fixing the housing body to the hull of a boat. The marine device also includes at least one transducer and one acoustic speaker positioned within the housing. The transducer is positioned and oriented within the housing in a manner such that the at least one transducer is configured for transmitting one or more sonar beams into a portion of the underwater environment when the housing is at least partially submerged, i.e. with a direction oriented towards the seabed of the sea. The acoustic speaker is positioned and oriented within the housing such that it can emit a sound for attracting fish into the underwater environment when the housing is at least partially submerged.

Such device is not capable of detecting obstacles that can be found floating or slightly immersed below the surface, and hence it is not capable of ensuring the safety of navigation of the boat.

Known from document GB 2011076 is a device provided with sonar, positionable on a vehicle such as a ship or a submarine, which comprises transducer means for transmitting and receiving acoustic waves at two different frequencies. More in detail, the reception means are adapted to generate echograms of the submerged surface due to the received transmitted pulse echoes.

Such device is not capable of detecting obstacles which can be found floating or slightly immersed below the surface, and hence it is not capable of ensuring the safety of navigation of the boat.

Known from document US 2018043978 is an underwater image generator device which functions in two modes, a towing mode and a free-flying mode. In the towing mode, for the location of underwater objects, the device opens the foldable wings in order to remain below the surface when the wings generate a negative floatability. Otherwise, neutral floatability characteristics bring the device back to the surface. In the free-flying mode, in order to approach and acquire images of underwater objects, the device closes the foldable wings and uses the propulsors in order to be moved in position for viewing the underwater objects.

Such device is not capable of detecting obstacles that can be found floating or slightly immersed below the surface, and it is not capable of ensuring the safety of navigation of the boat.

In other words, devices for use at sea are known which are constituted by echosounders, presently employed in bathymetry, in order to evaluate the depth of the seabeds from the hull of a boat or for detecting schools of fish.

Another example of known orientable sonar is described in US 3 886 487 A. Sonars are also known that have use for detecting deep objects, mainly used for the three-dimensional mapping of the seabeds.

### Presentation of the invention

In this situation, the problem underlying the present invention is therefore that of overcoming the drawbacks manifested by the abovementioned solutions of known type, by providing a watercraft for surface navigation which provides for a device for detecting obstacles in water, capable of ensuring the cruising advancement thereof in an entirely safe manner.

A further object of the present invention is that of providing a watercraft for surface navigation, which provides for a device for detecting obstacles in water, capable of being adapted to any type of watercraft.

A further object of the present finding is that of providing a device for detecting obstacles in water, which allows detecting any obstacle in the advancing direction of the watercraft.

A further object of the present finding is that of providing a device for detecting obstacles in water, which is entirely reliable in operation.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:

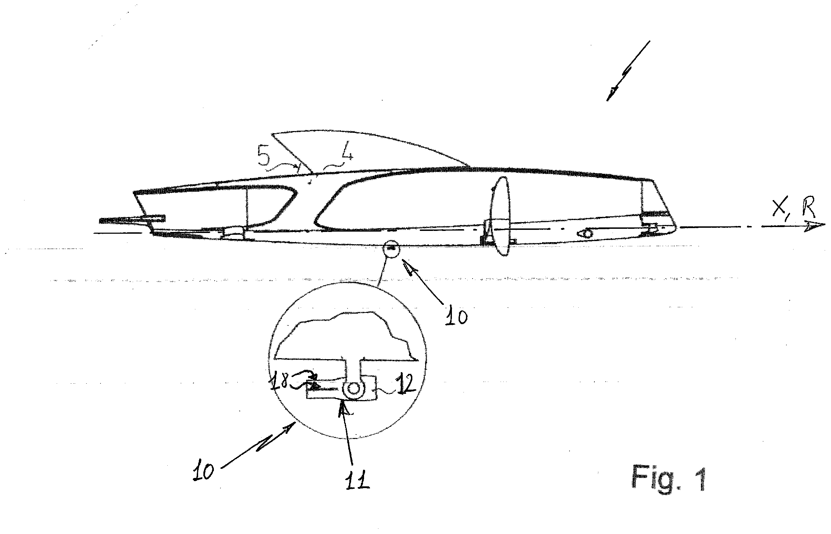

- figure 1 shows a side view of a watercraft, object of the present invention, with the device for detecting obstacles in water, object of the present invention, enlarged in a circle;
- figure 2 shows a perspective view of the device for detecting obstacles in water, object of the present invention, with the parts not visible or internal parts reported with a dashed line;

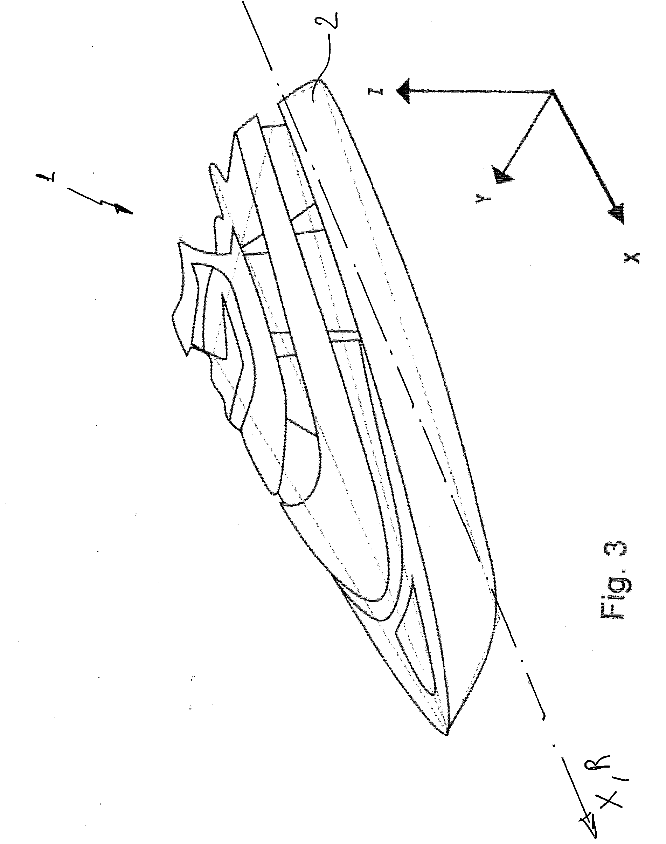

- figure 3 shows a perspective view of a watercraft according to the invention with three reference axes schematically represented;

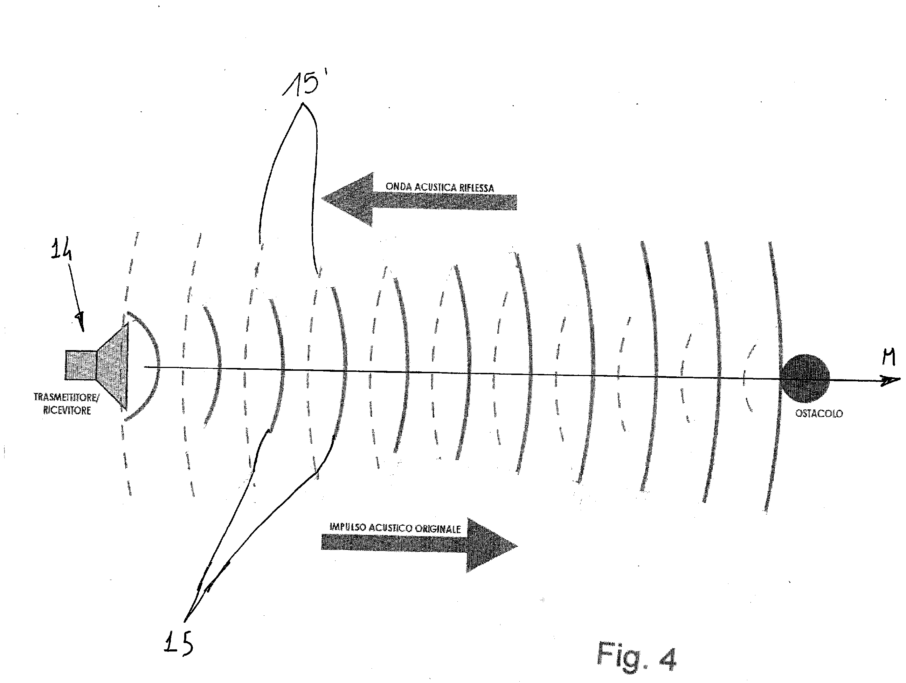

- figure 4 shows the operating principle of the device for detecting obstacles in water, object of the present invention;

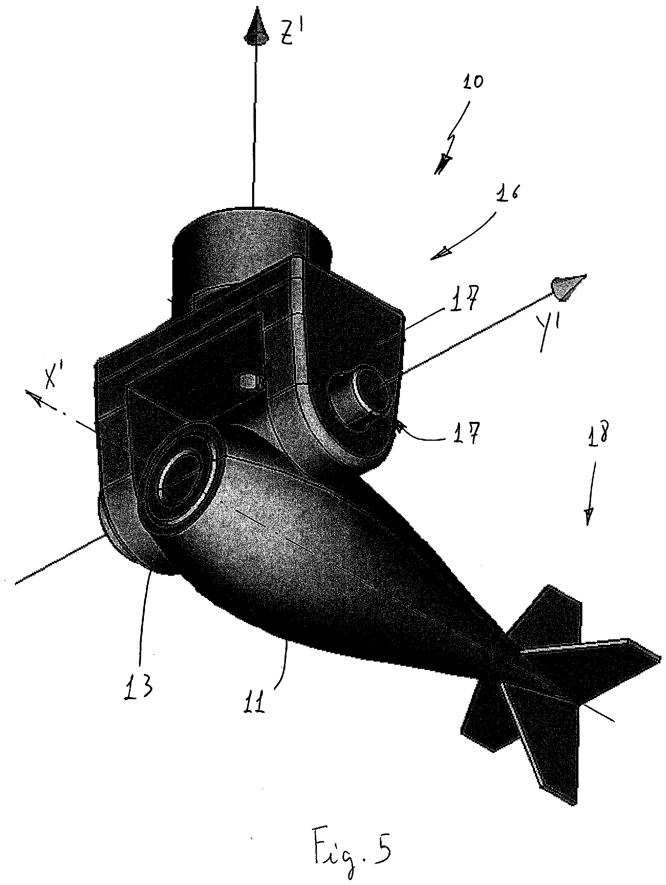

- figure 5 shows the device for detecting obstacles in water, object of the present invention, in a bottom perspective view;

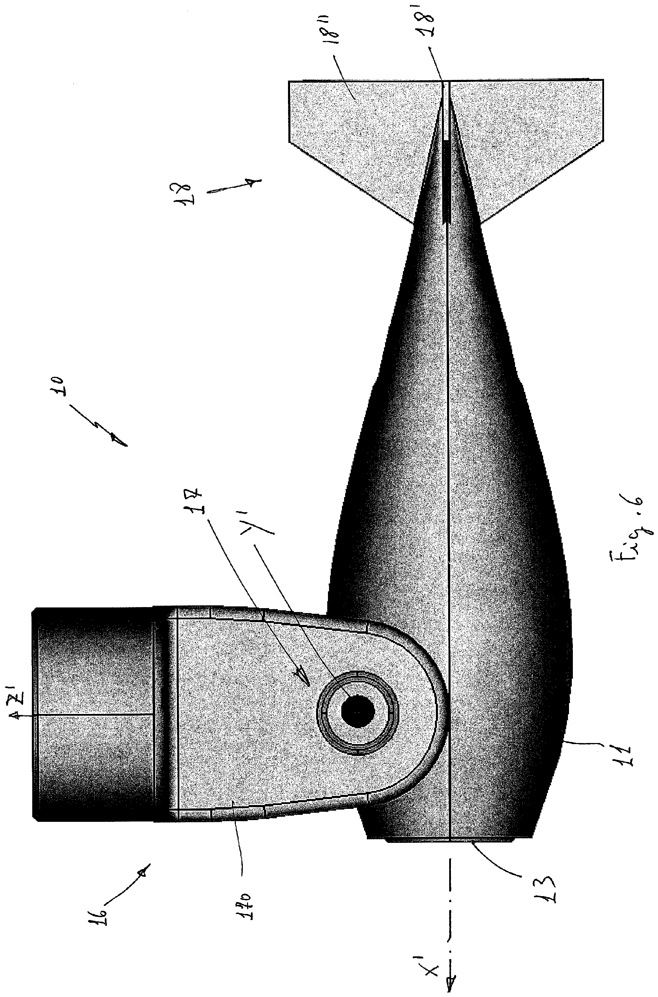

- figure 6 shows the device for detecting obstacles in water, object of the present invention, in a side view;

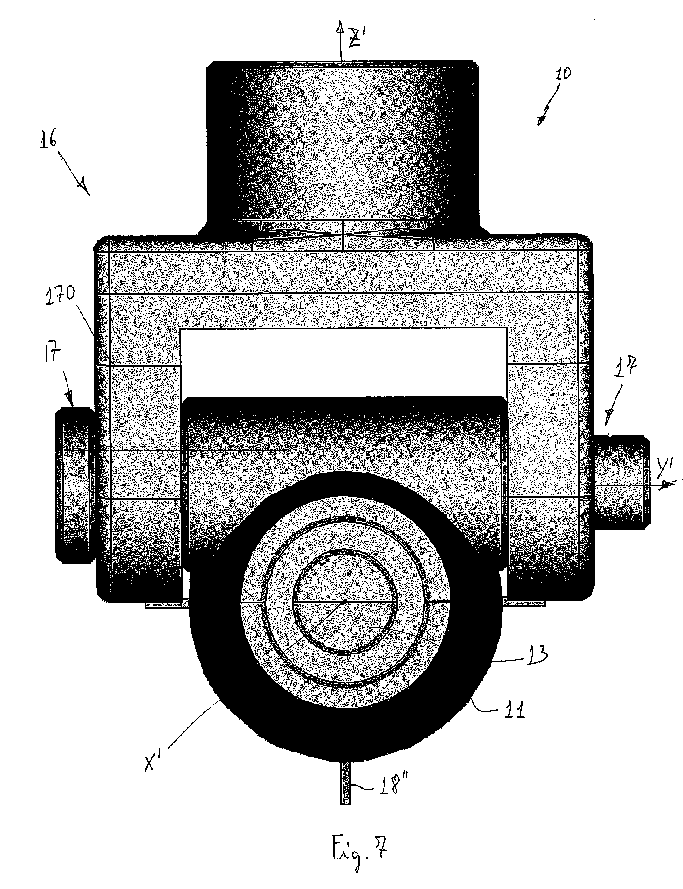

- figure 7 shows the device for detecting obstacles in water, object of the present invention, in a front view;
- figures 8A, 8B and 8C show the device for detecting obstacles in water, object of the present invention, in a front perspective view with three different examples of rudder finning;
- figures 9A, 9B and 9C show the device for detecting obstacles in water, object of the present invention, of the preceding figures 8A, 8B and 8C but in a rear perspective view.

### Detailed description of a preferred embodiment

With reference to the enclosed drawings, reference number 1 overall indicates the watercraft, object of the present invention, and 10 overall indicates the device for detecting obstacles in water, it too the object of the present invention, and in particular installable on a watercraft 1.

The watercraft 1 according to the invention can be any one boat susceptible of advancing on the water and hence in particular it can be of displacement type, i.e. with the bottom always immersed in water and adapted to advance by moving a quantity of water equal to the immersed volume, or of planing type with the bottom that advances on the surface of the water at a speed that allows being sustained due to hydrodynamic effect.

Advantageously but not exclusively, the invention will be connected to boats capable of producing high speeds on the water and, for example, will be connected to boats of "flying" type, i.e. having a significant reduction of the planing surface.

The watercraft 1 will have, in a normal manner, a relative motion direction with respect to the water, i.e. advancement direction on the water indicated with R hereinbelow. In the enclosed figures, such axis R has been indicated for the sake of simplicity to coincide with the longitudinal axis X of the watercraft 1, but it can also not coincide due to the pitch or the yaw or in case of leeway of the watercraft 1. Such relative motion will be in a first approximation due to the relative movement of the watercraft 1 with respect to the water, the motion of the water due to currents not being particularly relevant.

The watercraft 1 is provided with a longitudinal extension axis X and comprises a load-bearing structure 2 formed by the hull, i.e. by the framework of the watercraft and by the parts rigidly connected thereto, in a per se entirely conventional manner.

The longitudinal extension axis X of the watercraft 1 corresponds to its rolling axis and is thus extended horizontally from the stern to the bow, passing through the center of gravity of the watercraft 1 and being contained in the plane of longitudinal symmetry of the watercraft 1 itself.

The watercraft 1 also comprises one or more devices for detecting obstacles 10. Hereinbelow reference will be made to the example of a single device 10; nevertheless, it is possible to provide for multiple devices 10, in particular for covering different obstacle verification distances, or in order to cover different obstacle verification distances, or for a greater safety of the boat 1.

The aforesaid device for detecting obstacles 10 is advantageously provided with a shape which, as much as possible, has good hydrodynamics for advancing in the water with less friction.

More in detail, the device for detecting obstacles 10 comprises a housing body 11, which is extended with a main extension axis X' and is advantageously provided with a widened front portion and a tapered end. The housing body 11 delimits an internal chamber 12 and is provided with an emission mouth 13, which communicates with the internal chamber 12.

In the internal chamber 12 of the housing body 11, an active sonar sensor 14 is housed which is configured for emitting an acoustic signal beam 15 through the emission mouth 13.

The device for detecting obstacles 10 also comprises transducer means (not indicated with a reference number since they coincide in the illustrated embodiment with the sonar sensor 14), which are configured for detecting echoes of objects of acoustic waves produced by the active sonar sensor 14. Such transducer means can be obtained with the same active sonar sensor 14, i.e. they can be distinct and obtained for example with an equivalent sensor 14 e.g. of piezoelectric type. Such transducer means can be housed (also in the case of distinct transducer means different from the sonar sensor 14) both within the internal chamber 12 of the same housing body 11, i.e. they can be housed in a second internal chamber of a distinct second housing body 11, as better specified hereinbelow, for example entirely identical to that provided for the active sonar sensor 14.

The device for detecting obstacles 10 also comprises support means 16 for supporting the housing body 11 on the load-bearing structure 2 of the watercraft 1 below the water surface.

According to the idea underlying the present invention, the emission mouth 12 of the housing body 11 is oriented substantially horizontally towards the bow and the acoustic signal beam 15 of the active sonar sensor 14 is substantially propagated in the relative motion direction R of the watercraft 1 with respect to the water in order to intercept obstacles in the actual advancing bulk on the water of the same watercraft 1. With the expression horizontally towards the bow, it must be intended that the main extension axis X' of the support body 11 is maintained substantially parallel to the water surface from the side towards the bow of the watercraft 1. In particular the emission mouth 13 will be advantageously oriented in the longitudinal extension direction of the watercraft X and towards the bow when the watercraft 1 will not be subject to pitch, yaw or leeway. Otherwise during the curve maneuvers (yaw) or during the pitch the extension axis X of the watercraft 1, it will define an angle with the extension axis X' of the support body 11, such angle able to be determined by the presence of a joint with one or more degrees of freedom of the provided support means 16, as specified hereinbelow. In addition, according to the invention, the support means 16 comprising at least one first hinge 17 for allowing the free rotation of the housing body 11 around an axis Y' parallel to the pitch axis Y of the watercraft 1. The pitch axis Y is the transverse axis of the boat 1, i.e. which runs from right to left.

Still according to the idea underlying the present invention, the housing body 11 of the device for detecting obstacles 10 comprises a rudder finning 18, which due to its hydrodynamic drag with the water during the advancement of the watercraft 1 and due to the possibility of rotation of the housing body 11 allowed by the first hinge 17 around the pitch axis Y, is configured for orienting the same housing body 11 substantially in the relative motion direction R of the watercraft 1 with respect to the water.

Due to such configuration, in case of pitch of the watercraft 1, the housing body 11 and hence the active sonar sensor 14 are not oriented towards the bottom of the sea or towards the sky, but remain oriented in the advancement direction, i.e. relative motion direction R of the watercraft 1 on the water and hence they remain substantially oriented in the horizontal direction in the actual displacement direction on the water (and orientation direction of the extension axis X of the watercraft). In this manner, the device 10 is capable of detecting objects in the beam of the active sonar sensor 14, both floating and partially or totally submerged, towards which the watercraft 1 is actually heading. In the case of submerged objects, as specified hereinbelow, the device 10 is capable of detecting the presence up to several meters (e.g. 10 meters depth) from the surface of the sea, i.e. for at least the entire draught height of the bottom of the watercraft 1 and hence for example from the free surface of the sea up to several meters, or at most up to ten meters.

The automatic orientation of the housing body 11, and hence of the active sonar sensor 14, occurs due to the hydrodynamic interaction of the water on the rudder finning 18, which produces that rotation around the pitch axis Y of the first hinge 17 capable of bringing the housing body 11 with its main extension axis X' oriented parallel to the relative motion advancement direction R on the water of the watercraft 1. Advantageously, the acoustic signal beam 15 of the sonar sensor 14 is provided with a median axis M substantially horizontal and which is maintained substantially parallel to the water surface for the aforesaid reasons, the pitch movement of the watercraft being compensated for due to the first hinge 17.

Preferably, moreover, the acoustic signal beam 15 of the sonar sensor 14 is configured for intercepting the water surface.

The active sonar sensor 14 has characteristics that depend on the power, on the frequency and on the irradiation cone defined by an emission angle, which are per se known to the man skilled in the art and therefore not described in detail. In particular, for example, the wider the cone of the acoustic signal beam 15 of waves emitted by the sonar sensor 14, the smaller the detection distance, i.e. the distance in which the objects at sea are intercepted; otherwise, the narrower the cone of the acoustic signal beam 15, the greater the detection distance, of course given the same power and frequency.

In the present case, the active sonar sensor 14 is configurable, for example, in order to have at a distance of 100-1000 meters a coverage section of the acoustic signal beam 15 below the surface of the water that is 2-6 times the width of the watercraft 1, and in particular it is configured for having, at a distance of 400-600 meters, a coverage section of the acoustic signal beam 15 below the surface of the water that is 1.5 - 4 times the width of the watercraft 1. Advantageously, the emission angle for detecting objects at about 500 meters, with a boat five meters wide and with a coverage section of the acoustic signal beam 15 of fifteen meters diameter, is therefore about 1.7 degrees.

The coverage section is evaluated transverse to the median axis M of propagation of the acoustic signal beam 15 and is extended starting from the surface of the water with a curved shape, in particular substantially semicircle, part of the cone of the beam being dispersed in the air.

In first approximation, the device for detecting obstacles 10 is not aimed to identify the nature of the object at sea against which the watercraft 1 is directed, i.e. it is not aimed to identify what the obstacle actually is.

The device for detecting obstacles 10 comprises a logic control unit which is in signal connection with the active sonar sensor 14, with the transducer means and with provided means for controlling the advancement of the watercraft 1, in order to control them as a function of the signals received from the transducer means, so as to avoid the obstacle, i.e. for example through them controlling the course of the watercraft 1, that is accelerating or slowing the motion of the watercraft 1, up to even stopping the motion of the same watercraft 1.

An echo signal 15' of the acoustic signal beam 15 reflected by a body at sea and captured by the transducer means, suitably transformed from analog to digital, is then communicated to said logic control unit, which is configured for comparing such echo signal 15' with a threshold signal preset in the logic control unit and is configured with a logic programmed to command said means for controlling the advancement of the watercraft 1 to avoid the obstacle, for example by setting a course that avoids it, i.e. by stopping the watercraft, or by sending at least one first alarm signal.

The aforesaid threshold signal is indicative of a minimum echo in reception and captured by the transducer means, and corresponding to the smallest object susceptible of creating damage to the watercraft 1 and which therefore must be avoided.

Therefore, the logic control unit is adapted to control the advancement of the watercraft 1 in order to safely avoid the obstacle. The logic control unit is thus in particular in signal communication with a speed sensor of the means for controlling the advancement of the watercraft in order to ensure the safe maneuverability of the watercraft if an obstacle is detected.

In accordance with the logic programmed (set) in the logic control unit depending on the speed of the watercraft 1, different maneuvers can be provided and also different ratios can be provided with the sonar sensor 14 and/or with the transducer means, it being possible for example for the logic control unit to request multiple echoes indicative of the presence of obstacles in the case of low speeds of the watercraft 1 before intervening on the means for controlling the advancement of the watercraft 1, and instead the logic control unit will have to control the watercraft with a smaller number of echoes in case of high speeds of the watercraft.

Generally and advantageously with a displacement boat, which can have a high width and a low speed, it is possible to select a sonar sensor 14 configured with a cone of the acoustic signal beam 15 that is rather wide, capable of detecting obstacles that are closer but still at a sufficient distance so that - with low speed - the logic control unit can control the movement of the watercraft 1 in order to avoid the obstacle.

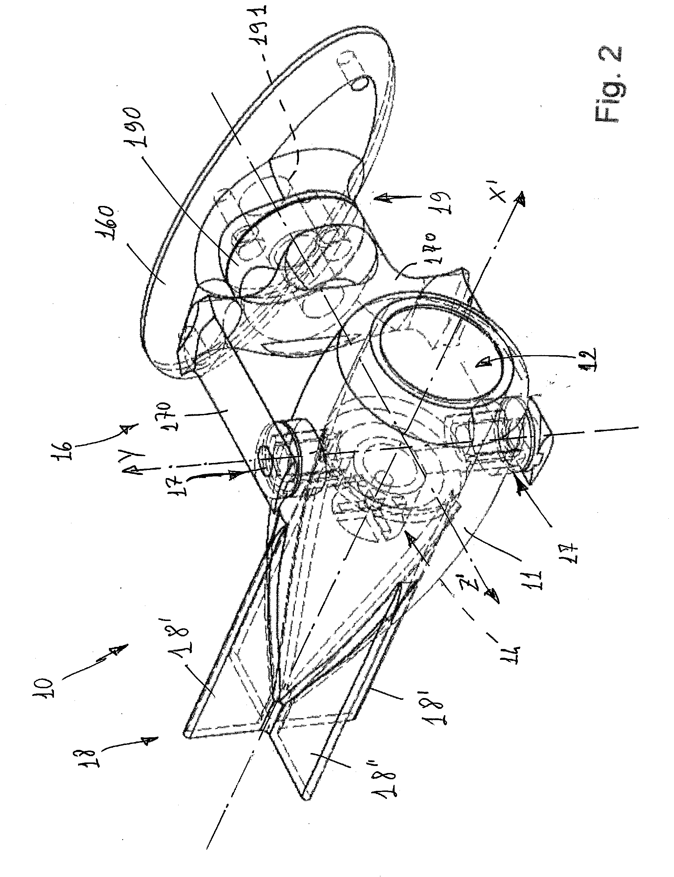

The support means 16 comprise at least one second hinge 19 (illustrated in figure 2) for allowing the free rotation of the housing body 11 around an axis Z' parallel to the yaw axis Z of the watercraft 1. The yaw axis Z is the axis orthogonal to the plane of the watercraft, i.e. it is the motion of the watercraft 1 intended for controlling the course direction.

The rudder finning 18 of the housing body 11 of the device for detecting obstacles 10, due to its hydrodynamic drag with the water during the advancement of the watercraft 1 and due to the possibility of rotation of the housing body 11 allowed by the second hinge 19 around the yaw axis 19, is configured for orienting the same housing body 11 substantially in the relative motion direction R of the watercraft 1 with respect to the water.

Due to such configuration, in case of yaw (curve in the course) of the watercraft 1, the housing body 11 and hence the active sonar sensor 14 are not oriented in the direction of the longitudinal extension axis X of the watercraft 1, but rather they remain oriented in the actual advancement direction of the watercraft 1, i.e. relative motion direction R with respect to the water.

Therefore, advantageously the housing body 11 has two degrees of freedom allowed by the two hinges 17 and 19 and remains aligned with the relative motion R of the watercraft 1 with respect to the current of the water that flows along the watercraft 1 itself and in particular below the bottom of the hull of the watercraft 1 where the housing body 11 is preferably fixed. In this manner, the displacements of the watercraft 1 are automatically compensated for due to the movements mainly of pitch and of yaw. Less significant is the control of the position of the housing body 11 with respect to rolling movements of the watercraft 1, so that such compensation preferably (but not necessary) is not provided for. Of course, the provision for example of a ball joint that also accounts for this orientation would be included within the variants of the present invention.

The two hinges 17 and 19 therefore allow the housing body 11 to be self-aligned with the current of the water in the relative motion R with the watercraft 1 on which the housing body 11 is mounted, allowing the watercraft 1 to be moved and the housing body 11 to remain aligned with the current of the water. In other words, physics is used for aligning the housing body 11 through the hydrodynamic drag.

It must in any case be observed that the leeway movement of the watercraft detects pitch movements to a smaller extent, and the quicker the movement of the watercraft the lower this is by an order of magnitude.

In accordance with a preferred embodiment of the present invention, the first hinge 17 of the support means 16 comprises a fork element 170 with the pivoted housing body 11 interposed along a rotation axis Y' parallel to the pitch axis Y. Such fork element 170 is connected to the housing body 11 preferably at its center of gravity or otherwise at the front side (towards the bow) of the housing body 11, but preferably not beyond the center of gravity.

Advantageously, the support means 16 comprise a base structure 160 (see figure 2) fixed to the load-bearing structure 2 of the watercraft 1 and also the second hinge 19 of the support means 16 comprises a stem 190 rotatably connected to the base 160 by means of a pin 191 provided with a rotation axis Z' parallel to the yaw axis.

The shape of the rudder finning 18 can be of any type so as to automatically compensate for the movements of the watercraft via pitch, or subordinately also via yaw. For example, the rudder finning 18 comprises at least one first wing 18' provided with an extension with a horizontal component for controlling the rotation of the housing body 11 along the rotation axis Y' of the first hinge 17 parallel to the pitch axis Y. In the example illustrated in the enclosed figures, the aforesaid at least one first wing 18' comprises two horizontal wings.

Advantageously, the rudder finning 18 also comprises a second wing 18" provided with an extension with a vertical component for controlling the rotation of the housing body 11 along the rotation axis Z' of the second hinge 19 parallel to the yaw axis 19. In the example illustrated in the enclosed figures, the aforesaid at least one second wing 18" comprises two vertical wings.

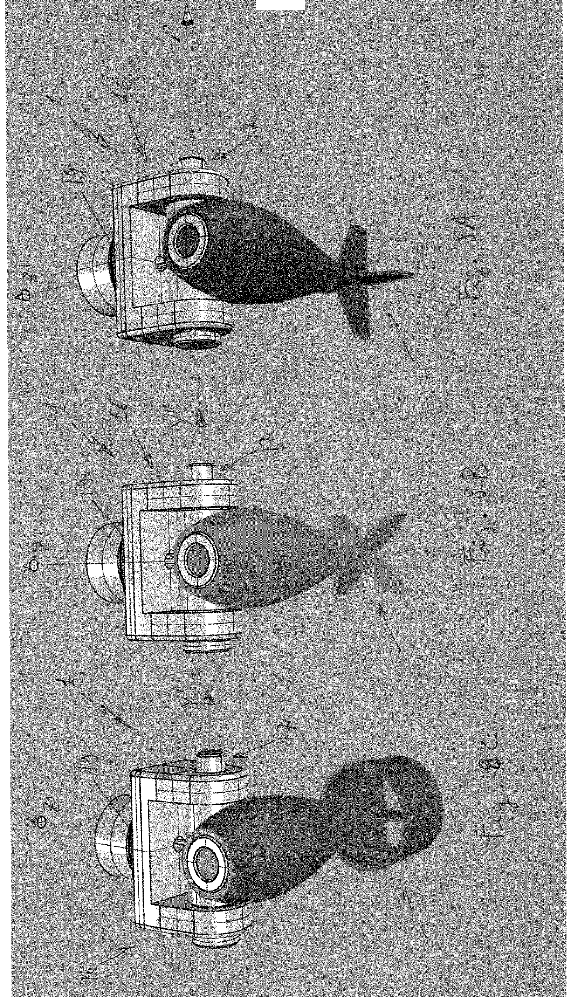

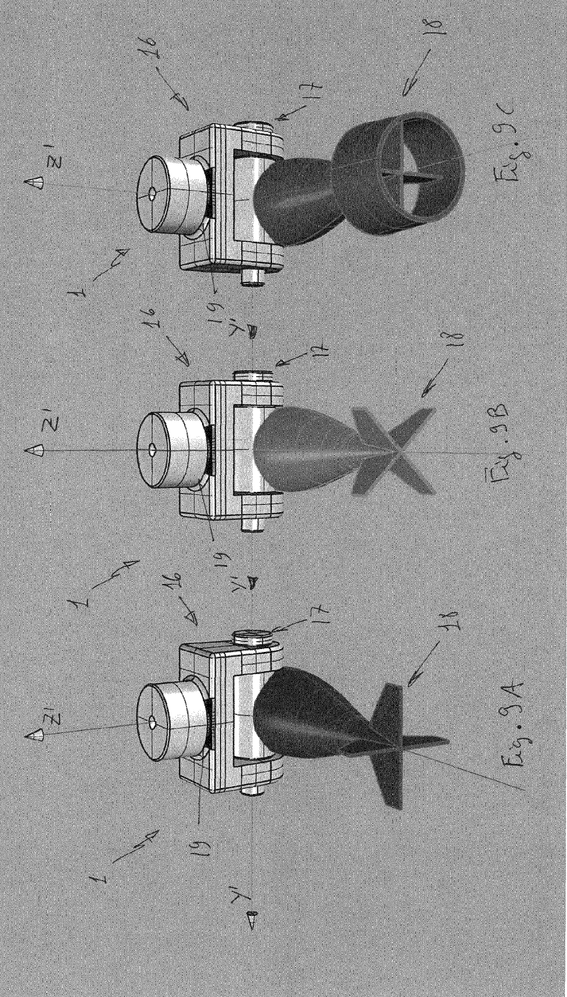

It is possible to match the two wings 18', 18" with at least one tilted wing (see figures 8B and 9B).

The rudder finning 18 can be shaped with cylindrical or conical stabilizing tail (see figure 18C).

The device 10 is fixed by means of the support means 16 to the load-bearing structure 2 of the watercraft 1 below the water surface and for such purpose can be positioned for example below the bottom of the watercraft 1, i.e. also to the side (by suitably shaping one arm of the support means 16) or to the stern as long as it is in a zone constantly wet by the water and reasonably outside of the interference of the flows generated by the propeller.

The containment body 11 substantially defines a box shaped like a speaker, in which the active sonar sensor 14 emits the acoustic signal beam 15 advantageously by means of a rigid membrane which emits for example a series of pulses through the emission mouth 12. The shape of the cone of the acoustic signal beam 15 depends on the shape of the cone of the speaker of the containment body 11 and hence advantageously determines the definition of the width of the emission source. It is possible to modify the emission angle by changing a suitable ring that defines the shape and the opening of the emission mouth 12.

Advantageously, in accordance with the known principle of the conventional sonars, well-known by the man skilled in the art, for example the sonar sensor 14 comprises a piezoelectric crystal fixed to a rigid emission membrane. Such crystal, as is known when it is electrically stressed, emits sound waves and when it is compressed it emits electrical energy. The "piezoelectric" membrane enters into excitation state if electrically stressed but it also produces energy if mechanically stressed. Therefore, the same sonar sensor 14 can act both as source of the acoustic signal beam 15 and as transducer means for the echo waves.

Preferably, the acoustic signal beam 15 is not fixed wave but rather is composed of a sequence of acoustic pulses that start from an initial frequency and which increase towards another frequency.

Advantageously, between one pulse sequence and the next, an interruption is provided for reading the echo return signal, which in particular will have a frequency in accordance with any one frequency of the emission range.

It is observed that the lower the frequency, the more it is possible for the acoustic signal beam 15 to travel far - but it is necessary to have wider surfaces to be detected; on the other hand, the higher the frequency, the more stops are required before detecting the possibility of echo signals, but even very small surfaces to be detected can be read.

The possibility of using a sonar sensor 14 for the emission of the beam of acoustic signals 15 and distinct transducer means receiving from the sonar sensor 14 (i.e. simply two piezoelectric sensors provided with two membranes) allows having one sensor that is always transmitting and one sensor that is always receiving, hence with continuous diagnostics of dangerous objects.

Advantageously, the continuous reading of the analog signal provides for a pause pulse for receiving the echo pulse and for attaining the synchronization of the emitted signal and of the received signal, i.e. for knowing when the emitted signal was sent. Also preferably provided for is a synchronism pulse with variable interval (i.e. a variable wait time) in order to which emitted signal echo is being read by the transducer means. For example, once the maximum time has been calculated for the acoustic signal beam 15 to move forward up to encountering the obstacle and returning back, the scanning time is defined with respect to which an interval, e.g. variable, will be commanded, to be considered after each scanning window in order to ensure the identification of the emitted acoustic signal beam 15 that is being read. In other words, a coding is provided for the emitted acoustic signal beam 15 in order to phase the two sensors and know which emitted signal 15 is being read by the receiving sensor (i.e. the transducer means).

The logic control unit advantageously provides for a module for filtering background noise in an electronic manner. The logic control unit receives, from the transducer means, the signals of the noise which it filters out, to the extent in which they are not ascribable to the presence of obstacles. Such noise is for example generated by the water which goes against the device 10 or directly against the sonar sensor 14, i.e. the noise of the motors of the propellers (propeller cavitation) but also other noises of the boat come, for example due to the bottom or for example to a musical apparatus in use on the watercraft.

The logic control unit therefore comprises a module for filtering the background noise which must also filter out the noises on board, since sonar sensor 14 is fixed to the hull. The man skilled in the art based on the aforesaid indications is easily capable of attaining electronic filters, in order to filter out noise that is due to factors certainly not referable to obstacles (in particular since continuous).

In particular, pre-filtered noises can also be provided for during the design of the sonar sensor 14, as well as other noises to be filtered during calibration of the sonar sensor 14, i.e. when the sonar sensor 14 is activated.

The filtering module of the logic control unit must in particular differentiate constant signals that are not referable to objects at sea (to be discarded) from pulse signals ascribable to pulse echoes of the emitted signal beam 15 (to be evaluate with the logic of the control unit set for the safety of the watercraft 1, in particular comparing them with the preset threshold signal).

The threshold signal preset in the logic control unit can be dynamic, i.e. vary for example as a function of the speed of the watercraft.

The emission mouth 12 of the internal cavity of the housing body 11 will be advantageously flat, i.e. otherwise it can be closed by a capsule for emitting the sound, of a material permeable to the acoustic waves and with known noise disturbance, easily filterable by the filtering module.

The abovementioned transducer means 14 can have housing in the same internal chamber 12 of the housing body 11 so as to receive the acoustic signal echoes through the emission mouth 13 of the same housing body 11, or they can be distinct and housed in a second internal chamber 12 of a distinct second housing body 11 provided with a second emission mouth 12 communicating with the second internal chamber.

In this case, the transducer means will be configured for receiving acoustic signal echoes through the second emission mouth 12 of the second housing body 11. The latter will be advantageously attained as already described above with reference to the first housing body 11 and will be mechanically connected with second support means 16 for connection to the watercraft 1 entirely analogous to that already specified above with reference to the first support means 16 and hence provided with a third hinge analogous to the second 17 considered above, and with a fourth hinge equivalent to the second 19 already considered above.

In operation, the second support means 16 (like those equivalent already described above) allow supporting the second housing body 11 of the device 10 on the load-bearing structure 2 of the watercraft 1 below the water surface with the second emission mouth 12 oriented horizontally towards the bow in order to receive acoustic signal echoes of objects against which the acoustic beam 15 emitted by the sonar sensor 14 has impacted.

Analogous to the first housing body 11, also the second housing body 11 of the device for detecting obstacles 10 comprises a second rudder finning 18, which is configured to orient - via hydrodynamic drag and with rotation at least around the pitch axis of the third hinge 17 - the second housing body 11' substantially in the relative motion direction R of the watercraft 1 with respect to the water. Advantageously, the rudder finning 18 of the second housing body 11 is configured to orient - via hydrodynamic drag and with rotation also around the yaw axis - the second housing body 11 substantially in the relative motion direction R of the watercraft 1 with respect to the water.

Also forming the object of the present invention is a device for detecting obstacles 10 intended to be employed mounted on a watercraft 1 of the type considered above and thus intended for surface navigation with relative motion direction R of the watercraft 1 with respect to the water.

The device 10 must be intended as equivalent to that described above mounted on the watercraft 1 and thus for this reason the description thereof is not conducted herein.

This can therefore be applied to any one watercraft or to any one boat susceptible of advancing on water and hence in particular of displacement type, of planing type or of "flying" type, i.e. having a significant reduction of the planing surface.

## Claims

1. Device for detecting obstacles for a watercraft intended for surface navigation with relative motion direction (R) with respect to the water and of the type provided with a longitudinal extension axis (X) and with a load-bearing structure (2) comprising at least one hull;
said device for detecting obstacles (10) being provided with a main extension axis (X') and comprising:
- at least one housing body (11) delimiting at least one internal chamber (12) and provided with an emission mouth (13) communicating with said internal chamber (12);
- at least one active sonar sensor (14), housed in the internal chamber (12) of said housing body (11) and configured for emitting an acoustic signal beam (15) through the emission mouth (13) of said housing body (11);
- support means (16) configured for supporting the housing body (11) of said device for detecting obstacles (10) on the load-bearing structure (2) of a watercraft (1) below the water surface;
wherein said housing body (11) is configured for being fixed by means of said support means (16) to the load-bearing structure (2) of a watercraft (1) with the emission mouth (13) oriented substantially horizontally and with the acoustic signal beam (15) of said sonar sensor (14) oriented substantially in the direction of the relative motion (R) of the watercraft (1) with respect to the water in order to intercept obstacles in the advancing bulk of the watercraft (1);
**characterised in that**
said support means (16) comprising at least one first hinge (17) for allowing the free rotation of said housing body (11) around an axis (Y') parallel to the pitch axis (Y) of said watercraft (1);
the housing body (11) of said device for detecting obstacles (10) comprising a rudder finning (18), which is configured to orient via hydrodynamic drag and with rotation at least around the axis (Y') of said first hinge (17) said housing body (11) substantially in the relative motion direction (R) of the watercraft (1) with respect to the water;
wherein said support means (16) comprise at least one second hinge (19) for allowing the free rotation of said housing body (11) around an axis (Z') parallel to the yaw axis (Z) of said watercraft (1); the rudder finning (18) of said housing body (11) being configured to orient via hydrodynamic drag and with rotation around the yaw axis (Z) said housing body (11) substantially in the relative motion direction (R) of the watercraft (1) with respect to the water.

2. Watercraft for surface navigation, which is susceptible of advancing with relative motion direction (R) with respect to the water, is provided with a longitudinal extension axis (X) and comprises:
- a load-bearing structure (2) comprising at least one hull;
- at least one device for detecting obstacles (10) according to claim 1;
wherein said device for detecting obstacles (10) further comprises transducer means configured for detecting echoes of objects of acoustic waves produced by said active sonar sensor (14);
wherein the emission mouth (13) is oriented substantially horizontally and the acoustic signal beam (15) of said sonar sensor (14) is propagated substantially in the relative motion direction (R) of the watercraft (1) with respect to the water in order to intercept obstacles in the advancing bulk of the watercraft (1).

3. Watercraft for surface navigation according to claim 2, **characterized in that** the acoustic signal beam (15) of said sonar sensor (14) is provided with a median axis (M) substantially horizontal and parallel to the water surface.

4. Watercraft for surface navigation according to claim 2 or 3, **characterized in that** the acoustic signal beam (15) of said sonar sensor (14) is configured for intercepting the water surface.

5. Watercraft for surface navigation according to any one of the preceding claims 2 to 4, **characterized in that** the first hinge (17) of said support means (16) comprises a fork element (170) with said housing body (11) interposed pivoted along a rotation axis (Y') parallel to said pitch axis (Y).

6. Watercraft for surface navigation according to any one of the preceding claims 2 to 5, **characterized in that** said support means (16) comprise a base structure (160) fixed to the load-bearing structure (2), the second hinge (19) of said support means (16) comprising a stem (190) rotatably connected to said base structure (160) by means of a pin (191) provided with a rotation axis (Z') parallel to said yaw axis (Z).

7. Watercraft for surface navigation according to claim 2, **characterized in that** said rudder finning (18) comprises at least one wing (18') provided with an extension with a horizontal component for controlling the rotation of said housing body (11) along the rotation axis (Y') of said first hinge (17) parallel to said pitch axis (Y).

8. Watercraft for surface navigation according to claim 2 or 7, **characterized in that** said rudder finning (18) comprises at least one wing (18") provided with an extension with a vertical component for controlling the rotation of said housing body (11) along the rotation axis (Z') of said second hinge (19) parallel to said yaw axis (Z).

9. Watercraft for surface navigation according to any one of claims 2, 7 or 8, **characterized in that** said rudder finning (18) comprises a cylindrical or conical stabilizing tail.

10. Watercraft for surface navigation according to any one of the preceding claims 2 to 9, **characterized in that** said transducer means are housed in the internal chamber (12) of said housing body (11) and configured for receiving acoustic signal echoes through the emission mouth (13) of said housing body (11).

11. Watercraft for surface navigation according to any one of the preceding claims from 2 to 9, **characterized in that** said device for detecting obstacles comprises: at least one second housing body (11) delimiting at least one second internal chamber (12) and provided with a second emission mouth (13) communicating with said second internal chamber (12); transducer means housed in the second internal chamber (12) of said second housing body (11) and configured for receiving acoustic signal echoes through the second emission mouth (13) of said second housing body (11); second support means (16) for supporting the second housing body (11) of said device for detecting obstacles (10) on said load-bearing structure (2) below the water surface; said second emission mouth (13) being oriented horizontally in order to receive acoustic signal echoes of objects on which the acoustic signal beam (15) emitted by said sonar sensor (14) has impacted; said second support means (16) comprising at least one third hinge (17) for rotating said second housing body (11) around the pitch axis (Y) of said watercraft (1); the second housing body (11) of said device for detecting obstacles (10) comprising a second rudder finning (18), which is configured to orient via hydrodynamic drag and with rotation at least around the axis of said third hinge (Y') said second housing body (11) substantially in the relative motion direction (R) of the watercraft with respect to the water.

## Patentansprüche

1. Vorrichtung zur Erkennung von Hindernissen für ein für die Überwasserschifffahrt bestimmtes Wasserfahrzeug mit relativer Bewegungsrichtung (R) im Verhältnis zum Wasser des mit einer Längsverlaufsachse (X) und einer tragenden Struktur (2) ausgestatteten Typs, umfassend mindestens einen Rumpf;
wobei die genannte Vorrichtung zur Erkennung von Hindernissen (10) mit einer Hauptverlaufsachse (X') ausgestattet ist und Folgendes umfasst:
- mindestens einen Aufnahmekörper (11), der mindestens eine Innenkammer (12) begrenzt und mit einer Austrittsöffnung (13) ausgestattet ist, die mit der genannten Innenkammer (12) in Verbindung steht;
- mindestens einen aktiven Sonarsensor (14), der in der Innenkammer (12) des genannten Aufnahmekörpers (11) untergebracht und darauf ausgelegt ist, ein akustisches Signalbündel (15) über die Austrittsöffnung (13) des genannten Aufnahmekörpers (11) auszugeben;
- Stützmittel (16), die darauf ausgelegt sind, den Aufnahmekörper (11) der genannten Vorrichtung zur Erkennung von Hindernissen (10) auf der tragenden Struktur (2) eines Wasserfahrzeugs (1) unterhalb der freien Oberfläche des Wassers zu tragen;
wobei der genannte Aufnahmekörper (11) darauf ausgelegt ist, mittels der genannten Stützmittel (16) an der tragenden Struktur (2) eines Wasserfahrzeugs (1) befestigt zu werden, wobei die Austrittsöffnung (13) im Wesentlichen horizontal ausgerichtet und das akustische Signalbündel (15) des genannten Sonarsensors (14) im Verhältnis zum Wasser im Wesentlichen in der relativen Bewegungsrichtung (R) des Wasserfahrzeugs (1) ausgerichtet ist, um Hindernisse im Fortbewegungsbereich des Wasserfahrzeugs (1) zu erkennen;
**dadurch gekennzeichnet, dass**
die genannten Stützmittel (16) mindestens ein erstes Gelenk (17) umfassen, um die freie Drehung des genannten Aufnahmekörpers (11) um eine Achse (Y') parallel zur Nickachse (Y) des Wasserfahrzeugs (1) zu gestatten;
wobei der Aufnahmekörper (11) der genannten Vorrichtung zur Erkennung von Hindernissen (10) eine Ruderflosse (18) umfasst, die darauf ausgelegt ist, durch hydrodynamischen Widerstand und bei Drehung mindestens um die Achse (Y') des genannten ersten Gelenks (17) den genannten Aufnahmekörper (11) im Verhältnis zum Wasser im Wesentlichen in der relativen Bewegungsrichtung (R) des Wasserfahrzeugs (1) auszurichten;
wobei die genannten Stützmittel (16) mindestens ein zweites Gelenk (19) umfassen, um die freie Drehung des genannten Aufnahmekörpers (11) um eine Achse (Z') parallel zur Gierachse (Z) des genannten Wasserfahrzeugs (1) zu gestatten; wobei die Ruderflosse (18) des genannten Aufnahmekörpers (11) darauf ausgelegt ist, den genannten Aufnahmekörper (11) im Verhältnis zum Wasser durch hydrodynamischen Widerstand und bei Drehung um die Gierachse (Z) im Wesentlichen in der relativen Bewegungsrichtung (R) des Wasserfahrzeugs (1) auszurichten.

2. Wasserfahrzeug für die Überwasserschifffahrt, das geeignet ist, sich mit relativer Bewegungsrichtung (R) im Verhältnis zum Wasser fortzubewegen, und mit einer Längsverlaufsachse (X) ausgestattet ist und Folgendes umfasst:
- eine tragende Struktur (2), die mindestens einen Rumpf umfasst;
- mindestens eine Vorrichtung zur Erkennung von Hindernissen (10) nach Anspruch 1, wobei die genannte Vorrichtung zur Erkennung von Hindernissen (10) außerdem Wandlermittel umfasst, die darauf ausgelegt sind, Echos von Objekten von akustischen Wellen zu erkennen, die von dem genannten aktiven Sonarsensor (14) erzeugt werden;
wobei die Austrittsöffnung (13) im Wesentlichen horizontal ausgerichtet ist und das akustische Signalbündel (15) des genannten Sonarsensors (14) sich im Verhältnis zum Wasser im Wesentlichen in der relativen Bewegungsrichtung (R) des Wasserfahrzugs (1) ausbreitet, um Hindernisse im Fortbewegungsbereich des Wasserfahrzeugs (1) zu erkennen.

3. Wasserfahrzeug für die Überwasserschifffahrt nach Anspruch 2, **dadurch gekennzeichnet, dass** das akustische Signalbünde (15) des genannten Sonarsensors (14) mit einer Mittelachse (M) ausgestattet ist, die im Wesentlichen horizontal und parallel zur freien Oberfläche des Wassers ist.

4. Wasserfahrzeug für die Überwasserschifffahrt nach Anspruch 2 oder 3, **dadurch gekennzeichnet, dass** das akustische Signalbündel (15) des genannten Sonarsensors (14) darauf ausgelegt ist, die freie Oberfläche des Wassers zu erkennen.

5. Wasserfahrzeug für die Überwasserschifffahrt nach einem beliebigen der vorangegangenen Ansprüche 2 bis 4, **dadurch gekennzeichnet, dass** das erste Gelenk (17) der genannten Stützmittel (16) ein Gabelelement (170) mit dem entlang einer Drehachse (Y') parallel zu der genannten Nickachse (Y) dazwischen eingefügten angelenkten Aufnahmekörper (11) umfasst.

6. Wasserfahrzeug für die Überwasserschifffahrt nach einem beliebigen der vorangegangenen Ansprüche 2 bis 5, **dadurch gekennzeichnet, dass** die genannten Stützmittel (16) eine an der tragenden Struktur (2) befestigte Basisstruktur (160) umfassen, wobei das zweite Gelenk (19) der genannten Stützmittel (16) ein Bein (190) umfasst, das mittels eines Zapfens (191), der eine zu der genannten Gierachse (Z) parallele Drehachse (Z') aufweist, drehbar mit der Basisstruktur (160) verbunden ist.

7. Wasserfahrzeug für die Überwasserschifffahrt nach Anspruch 2, **dadurch gekennzeichnet, dass** die genannte Ruderflosse (18) mindestens einen Flügel (18') umfasst, der einen Verlauf mit einer horizontalen Komponente aufweist, um die Drehung des genannten Aufnahmekörpers (11) entlang der Drehachse (Y') des genannten ersten Gelenks (17) parallel zu der genannten Nickachse (Y) zu steuern.

8. Wasserfahrzeug für die Überwasserschifffahrt nach Anspruch 2 oder 7, **dadurch gekennzeichnet, dass** die genannte Ruderflosse (18) mindestens einen Flügel (18') umfasst, der einen Verlauf mit einer vertikalen Komponente aufweist, um die Drehung des genannten Aufnahmekörpers (11) entlang der Drehachse (Z') des genannten zweiten Gelenks (19) parallel zu der genannten Gierachse (Z) zu steuern.

9. Wasserfahrzeug für die Überwasserschifffahrt nach einem beliebigen der Ansprüche 2, 7 oder 8, **dadurch gekennzeichnet, dass** die genannte Ruderflosse (18) ein zylindrisches oder konisches Stabilisierungsheck aufweist.

10. Wasserfahrzeug für die Überwasserschifffahrt nach einem beliebigen der vorangegangenen Ansprüche 2 bis 9, **dadurch gekennzeichnet, dass** die genannten Wandlermittel in der Innenkammer (12) des genannten Aufnahmekörpers (11) untergebracht und darauf ausgelegt sind, akustische Signalechos über die Austrittsöffnung (13) des genannten Aufnahmekörpers (11) zu empfangen.

11. Wasserfahrzeug für die Überwasserschifffahrt nach einem beliebigen der vorangegangenen Ansprüche 2 bis 9, **dadurch gekennzeichnet, dass** die genannte Vorrichtung zur Erkennung von Hindernissen Folgendes umfasst: mindestens einen zweiten Aufnahmekörper (11), der mindestens eine zweite Innenkammer (12) begrenzt und mit einer zweiten Austrittsöffnung (13) versehen ist, die mit der genannten zweiten Innenkammer (12) in Verbindung steht; Wandlermittel, die in der zweiten Innenkammer (12) des genannten zweiten Aufnahmekörpers (11) untergebracht und darauf ausgelegt sind, akustische Signalechos über die zweite Austrittsöffnung (13) des genannten zweiten Aufnahmekörpers (11) zu empfangen; zweite Stützmittel (16), um den zweiten Aufnahmekörper (11) der genannten Vorrichtung zur Erkennung von Hindernissen (10) auf der genannten tragenden Struktur (2) unterhalb der freien Oberfläche des Wassers abzustützen; wobei die genannte zweite Austrittsöffnung (13) horizontal ausgerichtet ist, um akustische Signalechos von Objekten zu empfangen, auf die das von dem genannten Sonarsensor (14) ausgesendete akustische Signalbündel (15) aufgetroffen ist; wobei die genannten zweiten Stützmittel (16) mindestens ein drittes Gelenk (17) zum Drehen des genannten zweiten Aufnahmekörpers (11) um die Nickachse (Y) des genannten Wasserfahrzeugs (1) umfassen; wobei der genannte zweite Aufnahmekörper (11) der genannten Vorrichtung zur Erkennung von Hindernissen (10) eine zweite Ruderflosse (18) umfasst, die darauf ausgelegt ist, durch hydrodynamischen Widerstand und bei Drehung mindestens um die Achse des genannten dritten Gelenks (Y') den genannten zweiten Aufnahmekörper (11) im Verhältnis zum Wasser im Wesentlichen in der relativen Bewegungsrichtung (R) des Wasserfahrzeugs auszurichten.

## Revendications

1. Dispositif de détection d'obstacles pour un bateau destiné à la navigation de surface avec une direction de mouvement relatif (R) par rapport à l'eau et du type ayant un axe de développement longitudinal (X) et une structure de support (2) comprenant au moins une coque ;
ledit dispositif de détection d'obstacles (10) étant pourvu d'un axe de développement principal (X') et comprenant :
- au moins un corps de boîtier (11) délimitant au moins une chambre intérieure (12) et équipé d'un orifice d'émission (13) communiquant avec ladite chambre intérieure (12) ;
- au moins un capteur de sonar actif (14), logé dans la chambre intérieure (12) dudit corps de boîtier (11) et configuré pour émettre un faisceau de signal acoustique (15) à travers l'orifice d'émission (13) dudit corps de boîtier (11) ;
- des moyens de support (16) configurés pour supporter le corps de boîtier (11) dudit dispositif de détection d'obstacles (10) sur la structure de support (2) d'un bateau (1) au-dessous de la surface libre de l'eau ;
dans lequel ledit corps de boîtier (11) est configuré pour être fixé par l'intermédiaire desdits moyens de support (16) à la structure de support (2) d'un bateau (1) avec l'orifice d'émission (13) orienté sensiblement de manière horizontale et avec le faisceau de signal acoustique (15) dudit capteur de sonar (14) orienté sensiblement vers la direction du mouvement relatif (R) du bateau (1) par rapport à l'eau pour intercepter des obstacles dans l'encombrement d'avancement du bateau (1) ;
**caractérisé en ce que**
lesdits moyens de support (16) comprennent au moins une première charnière (17) pour permettre la libre rotation dudit corps de boîtier (11) autour d'un axe (Y') parallèle à l'axe de tangage (Y) dudit bateau (1) ;
le corps de boîtier (11) dudit dispositif de détection d'obstacles (10) comprenant un ailettage de gouvernail (18), qui est configuré pour orienter par résistance à l'écoulement et avec une rotation au moins autour de l'axe (Y') de ladite première charnière (17) ledit corps de boîtier (11) sensiblement dans la direction du mouvement relatif (R) du bateau (1) par rapport à l'eau ;
dans lequel lesdits moyens de support (16) comprennent au moins une deuxième charnière (19) pour permettre la rotation libre dudit corps de boîtier (11) autour d'un axe (Z') parallèle à l'axe de lacet (Z) dudit bateau (1) ; l'ailettage de gouvernail (18) dudit corps de boîtier (11) étant configuré pour orienter par résistance à l'écoulement et avec une rotation autour de l'axe de lacet (Z) ledit corps de boîtier (11) sensiblement dans la direction du mouvement relatif (R) du bateau (1) par rapport à l'eau.

2. Bateau pour la navigation de surface, qui est susceptible d'avancer ayant une direction de mouvement relatif (R) par rapport à l'eau, étant équipé d'un axe de développement longitudinal (X) et comprenant :
- une structure de support (2) comprenant au moins une coque ;
- au moins un dispositif de détection d'obstacles (10) selon la revendication 1 ;
dans lequel ledit dispositif de détection d'obstacles (10) comprend en outre des moyens de transduction configurés pour détecter des échos d'objets des ondes acoustiques produites par ledit capteur de sonar actif (14) ;
dans lequel l'orifice d'émission (13) est orienté sensiblement de manière horizontale et le faisceau de signal acoustique (15) dudit capteur de sonar (14) se propage sensiblement dans la direction du mouvement relatif (R) du bateau (1) par rapport à l'eau afin d'intercepter des obstacles dans l'encombrement d'avancement du bateau (1).

3. Bateau pour la navigation de surface selon la revendication 2, **caractérisé en ce que** le faisceau de signal acoustique (15) dudit capteur de sonar (14) est équipé d'un axe médian (M) substantiellement horizontal et parallèle à la surface libre de l'eau.

4. Bateau pour la navigation de surface selon la revendication 2 ou 3, **caractérisé en ce que** le faisceau de signal acoustique (15) dudit capteur de sonar (14) est configuré pour intercepter la surface libre de l'eau.

5. Bateau pour la navigation de surface selon l'une quelconque des revendications précédentes 2 à 4, **caractérisé en ce que** la première charnière (17) desdits moyens de support (16) comprend un élément de fourche (170) avec ledit corps de boîtier (11) pivotant interposé le long d'un axe de rotation (Y') parallèle audit axe de tangage (Y).

6. Bateau pour la navigation de surface selon l'une quelconque des revendications précédentes 2 à 5, **caractérisé en ce que** lesdits moyens de support (16) comprennent une structure de base (160) fixée à la structure de support (2), la deuxième charnière (19) desdits moyens de support (16) comprenant une jambe (190) reliée de manière rotative à ladite structure de base (160) au moyen d'un pivot (191) équipé d'un axe de rotation (Z') parallèle audit axe de lacet (Z).

7. Bateau pour la navigation de surface selon la revendication 2, **caractérisé en ce que** ledit ailettage de gouvernail (18) comprend au moins une aile (18') équipée d'un développement avec une composante horizontale pour contrôler la rotation dudit corps de boîtier (11) le long de l'axe de rotation (Y') de ladite première charnière (17) parallèle audit axe de tangage (Y).

8. Bateau pour la navigation de surface selon la revendication 2 ou 7, **caractérisé en ce que** ledit ailettage de gouvernail (18) comprend au moins une aile (18") équipée d'un développement avec une composante verticale pour contrôler la rotation dudit corps de boîtier (11) le long de l'axe de rotation (Z') de ladite deuxième charnière (19) parallèle audit axe de lacet (Z).

9. Bateau pour la navigation de surface selon l'une quelconque des revendications 2, 7 ou 8, **caractérisé en ce que** ledit ailettage de gouvernail (18) comprend une queue de stabilisation cylindrique ou conique.

10. Bateau pour la navigation de surface selon l'une quelconque des revendications précédentes 2 à 9, **caractérisé en ce que** lesdits moyens transducteurs sont logés dans la chambre intérieure (12) dudit corps de boîtier (11) et configurés pour recevoir des échos de signal acoustiques à travers l'orifice d'émission (13) dudit corps de boîtier (11).

11. Bateau pour la navigation de surface selon l'une quelconque des revendications précédentes 2 à 9, **caractérisé en ce que** ledit dispositif de détection d'obstacles comprend : au moins un deuxième corps de boîtier (11) délimitant au moins une deuxième chambre intérieure (12) et équipé d'un deuxième orifice d'émission (13) communiquant avec ladite deuxième chambre intérieure (12) ; des moyens transducteurs logés dans la deuxième chambre intérieure (12) dudit deuxième corps de boîtier (11) et configurés pour recevoir des échos de signal acoustiques à travers le deuxième orifice d'émission (13) dudit deuxième corps de boîtier (11) ; des deuxièmes moyens de support (16) pour supporter le deuxième corps de boîtier (11) dudit dispositif de détection d'obstacles (10) sur ladite structure de support (2) au-dessous de la surface libre de l'eau ; ledit deuxième orifice d'émission (13) étant orienté de manière horizontale pour recevoir des échos de signal acoustiques d'objets touchés par le faisceau de signal acoustique (15) émis par ledit capteur de sonar (14) ; lesdits deuxièmes moyens de support (16) comprenant au moins une troisième charnière (17) pour la rotation dudit deuxième corps de boîtier (11) autour de l'axe de tangage (Y) dudit bateau (1) ; le deuxième corps de boîtier (11) dudit dispositif de détection d'obstacles (10) comprenant un deuxième ailettage de gouvernail (18), qui est configuré pour orienter par résistance à l'écoulement et avec une rotation au moins autour de l'axe de ladite troisième charnière (Y') ledit deuxième corps de boîtier (11) sensiblement dans la direction de mouvement relatif (R) du bateau par rapport à l'eau.
